# FASCICULE DE BREVET EUROPEEN

(11) **EP 0 872 797 B1**
(45) Date de publication et mention de la délivrance du brevet: **10.03.2004**
(21) Numéro de dépôt: 98400942.3
(22) Date de dépôt: 16.04.1998
(51) Int. Cl.: G06F 9/46

(54) **Gestion de la mort accidentelle d'un objet lors d'une communication entre objets distribués dans un environnement COM**
Verwaltung des Absturzes eines Objektes während eines Datenaustausches zwischen Objekten in einer COM-Umgebung
Handling an object crash during inter-object communication in a COM environment

(30) Priorité: 17.04.1997 FR 9704743
(43) Date de publication de la demande: 21.10.1998
(73) Titulaire: ALCATEL, 75008 Paris (FR)
(72) Inventeur: Feray, Alexandre, 75013 Paris (FR); Mougin, Philippe, 04220 Sainte Tulle (FR)
(74) Mandataire: Sciaux, Edmond

(56) Documents cités:
- GB-A- 2 305 271
- S. WILLIAMS ET AL: "The Component Object Model - The foundation for OLE services" DR. DOBB'S SPECIAL REPORT, WINTER 1994/95, vol. 14, no. 16, 21 décembre 1994, pages 14-22, XP002025907

## Description

La présente invention concerne un procédé permettant à un objet ayant ouvert une communication avec un autre objet d'être informé de la mort accidentelle de ce dernier. L'invention s'inscrit dans un environnement objet utilisant la technologie COM de Microsoft Corporation.

La présente invention trouve notamment une application dans le domaine des systèmes de supervision de processus industriels. De façon classique, un tel système acquiert en temps réel des données provenant de différents équipements supervisés, et présente des informations relatives à ces équipements sur un ou plusieurs terminaux. Entre autres contraintes, il est impératif que les informations affichées soient pertinentes de sorte que l'opérateur chargé de la surveillance du processus industriel soit à même de faire un bon diagnostic de son état.
Ainsi, lorsqu'une connexion entre un équipement et le système de supervision est rompue à la suite d'une avarie quelconque, le système doit en informer l'opérateur dans un délai aussi bref que possible.

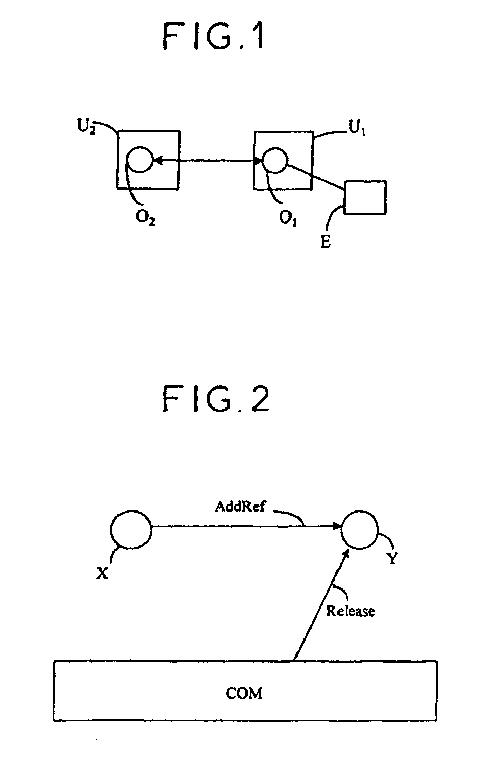

Certains systèmes de supervision récents mettent en oeuvre des architectures orientées objet susceptibles d'être distribuées sur plusieurs unités d'exécution. La figure 1 représente une architecture typique d'un système de supervision. Un équipement E est supervisé par un objet O₁ placé dans une unité d'exécution U₁ située sur le même site que cet équipement. L'objet O₁ communique, au moyen d'un réseau, avec un objet O₂ placé dans une unité d'exécution U₂ située sur un site distant, dont le but est de faire un certain traitement, notamment d'afficher des informations à destination d'un opérateur.

Afin d'aider le développement de telles applications orientées objet et distribuées, il existe différents outils que l'on regroupe sous l'acronyme général DPE (pour *Distributed Processing Environment* en anglais). Le but des DPE est d'exempter le développeur de la gestion de la localisation des objets dans une architecture distribuée, et des communications entre ceux-ci.
Deux grandes familles de DPE existent: l'une est basée sur la spécification de l'OMG (*Open Management Group*) et est nommée CORBA (*Common Object Request Broker Architecture*), l'autre est constituée autour du produit COM (*Component Object Model*), conçu par la société Microsoft Corporation.

Dans sa première version, COM ne gérait que la distribution des objets sur un ensemble de processus situés sur une unique unité d'exécution (sur un seul ordinateur par exemple). Une seconde version, appelée DCOM pour *Distributed Component Object Model*, permet d'atteindre un second niveau de distribution en gérant la distribution des objets au sein de plusieurs unités d'exécution.
La présente invention s'applique à la fois à COM et à DCOM de sorte que dans la suite de la description, il ne sera fait référence qu'à l'acronyme COM pour recouvrir l'ensemble des deux versions.

La figure 2 présente le mécanisme offert par COM pour la gestion de la mort accidentelle d'un objet. Comme nous allons le voir, ce mécanisme est insuffisant dans de nombreux cas de figure.

A chaque fois qu'un objet client X ouvre une communication avec un objet serveur Y, il fait appel à une fonction spécifique offerte par COM qui s'appelle *AddRef* et dont le but est d'incrémenter un compteur associé à l'objet serveur Y. Lors de la fin normale de la communication, le client X appelle une autre fonction offerte par COM qui s'appelle *Release* et dont le but est de décrémenter ce même compteur. Lorsque le compteur devient égal à zéro, cela signifie qu'il n'existe plus aucune communication ouverte vers l'objet serveur Y ; autrement dit, il n'y a plus d'objet client qui nécessite les services de l'objet serveur Y. Aussi, il est possible de libérer les ressources occupées par l'objet serveur Y.
Lorsque l'objet client X meurt de façon accidentelle, il n'est pas en mesure d'appeler la fonction *Release* pour décrémenter le compteur associé à l'objet serveur. Cependant, l'infrastructure COM détecte la mort accidentelle de l'objet client X et se charge d'appeler la fonction *Release* afin d'assurer une valeur pertinente à ce compteur.

Pour plus de renseignement sur les mécanismes propres à COM, on pourra se référer au document *The Component Object Model Specification*, publié par *Microsoft Corporation.* Ce document est disponible auprès de Microsoft Corp., notamment sur le site internet dont l'adresse est la suivante :
« http://www.microsoft.com/oledev/olecom/title.html »
On peut aussi se référer au document, assez didactique, de Sara Williams and Charlie Kindel, *The Component Object Model ― The Foundation for OLE Services*, paru dans Dr. Dobb's Special Report, winter 1994/95, vol. 14, N° 16, pages 14 à 22.

Comme il a été annoncé, ce mécanisme est insuffisant puisqu'il ne permet pas à l'objet client X d'être informé de la mort accidentelle de l'objet serveur Y. En fait, la relation entre les objets est inversée par rapport aux besoins.

De plus, dans le cas où un objet possède des communications avec plusieurs autres objets, l'appel de la fonction *Release* par COM en cas de mort accidentelle d'un de ces objets, ne lui permet pas de savoir lequel de ces objets est mort de façon accidentelle. La seule information fournie est qu'il existe un objet venant de mourir parmi l'ensemble des objets serveurs.

Comme nous l'avons mentionné précédemment, cela pose un problème dans le cas d'un système de supervision puisque les informations affichées ne sont plus à jour, sans que l'opérateur en soit averti, mais cette insuffisance a des répercussions dans d'autres domaines techniques comme, par exemple, la gestion de réseau. Par conséquent, l'invention ne saurait être comprise comme se limitant au domaine de la supervision de processus industriel. La présente invention est, au contraire, de portée très générale et son but est de proposer un procédé permettant à un premier objet ayant ouvert une communication avec un second objet d'être informé en cas de mort accidentelle de ce dernier.

Ce procédé selon l'invention se caractérise en ce que :
- le premier objet crée un objet intermédiaire et envoie au second objet un message contenant une référence de cet objet intermédiaire,
- le second objet appelle une méthode *AddRef*, offerte par COM, avec comme paramètre une référence de l'objet intermédiaire (W),
- lorsque COM appelle la méthode *Release* de l'objet intermédiaire, l'objet intermédiaire envoie au premier objet un message l'informant de la mort accidentelle du second objet.

Les caractéristiques et les avantages de la présente invention apparaîtront de façon plus claire dans la description qui va suivre en liaison avec les figures jointes.
La figure 1, déjà commentée, représente l'architecture générale d'une application de la présente invention.
La figure 2, déjà commentée, présente le mécanisme basique offert par COM.
La figure 3 présente un exemple de la phase d'initialisation d'une communication entre objets selon l'invention.
La figure 4 illustre le mécanisme selon l'invention en cas de mort accidentelle d'un objet supervisé.

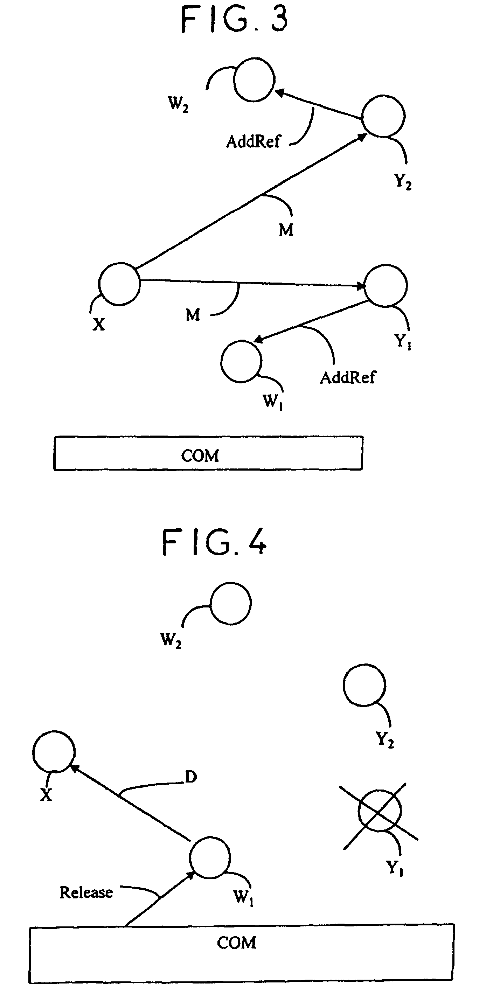

Selon l'invention, lorsqu'un objet superviseur désire être informé de la mort accidentelle d'un objet supervisé, il crée tout d'abord un objet intermédiaire. Il envoie ensuite à destination de l'objet supervisé un message M contenant une référence de l'objet intermédiaire. Cet objet intermédiaire est propre à une unique relation entre deux objets. Aussi, si l'objet superviseur nécessite d'être informé de la mort accidentelle de plusieurs objets supervisés, il lui est nécessaire de créer autant d'objets intermédiaires qu'il y a d'objets supervisé.
Par exemple, sur la figure 3, l'objet superviseur X désire être informé de la mort accidentelle des deux objets supervisés Y₁ et Y₂. Pour cela il crée deux objets intermédiaires W₁ et W₂. Il envoie ensuite un message à chacun des deux objets supervisés, contenant la référence de l'objet intermédiaire correspondant (W₁ pour Y₁ et W₂ pour Y).
En réponse à ce message, chaque objet supervisé (Y₁ ou Y₂) fait appel à la fonction *AddRef* avec comme paramètre une référence de l'objet intermédiaire (respectivement W₁, W₂) qui lui est associé (c'est-à-dire dont il a reçu la référence par le message M envoyé par l'objet superviseur). De la sorte, chaque objet intermédiaire (W₁, W₂) devient l'unique serveur d'un unique objet client (respectivement Y₁, Y₂) et la relation induite par COM est inversée et rendue adéquate aux besoins.

Lors de la mort accidentelle d'un objet supervisé, par exemple Y₁ comme illustré sur la figure 4, le système COM en informe l'objet intermédiaire associé (W₁) par l'appel de la fonction *Release*. Cet objet intermédiaire n'ayant qu'un seul objet supervisé associé, l'ambiguïté inhérente à la sémantique de COM est levé. Il est donc à même d'envoyer à son objet superviseur associé (X) un message D contenant une référence de l'objet supervisé (Y₁) qui vient de mourir accidentellement.

## Revendications

1. Procédé permettant à un premier objet (X) ouvrant une communication avec un second objet (Y) d'être informé lors de la mort accidentelle dudit second objet (Y), dans un environnement COM, **caractérisé en ce que** :
• ledit premier objet (X) crée un objet intermédiaire (W) et envoie audit second objet (Y) un message (M) contenant une référence dudit objet intermédiaire (W),
• ledit second objet (Y) appelle une méthode *AddRef*, offerte par COM, avec comme paramètre une référence dudit objet intermédiaire (W),
• et **en ce que** lorsque COM appelle la méthode *Release* dudit objet intermédiaire (W), ledit objet intermédiaire (W) envoie audit premier objet (X) un message (D) l'informant de la mort accidentelle dudit second objet (Y).

## Patentansprüche

1. Verfahren, aufgrund dessen ein erstes Objekt (X), das einen Datenaustausch mit einem zweiten Objekt (Y) beginnt, in einer COM-Umgebung über den Absturz des genannten zweiten Objekts (Y) informiert werden kann, **dadurch gekennzeichnet, dass**:
• das genannte erste Objekt (X) ein Zwischenobjekt (W) kreiert und dem genannten zweiten Objekt (Y) eine Nachricht (M) schickt, die eine Referenz dieses Zwischenobjekts (W) enthält,
• das genannte zweite Objekt (Y) ein von COM angebotenes Verfahren *AddRef* aufruft, wobei der Parameter eine Referenz des genannten Zwischenobjekts (W) ist;
• wenn COM das Verfahren *Release* des genannten Zwischenobjekts (W) aufruft, dieses Zwischenobjekt (W) dem ersten Objekt (X) eine Nachricht (D) mit der Information über den Absturz des zweiten Objekts (Y) schickt.

## Claims

1. A method enabling a first object (X) opening up communication with a second object (Y) to be informed in the event of accidental death of said second object (Y), in a COM environment, said method being **characterized in that**:
said first object (X) creates an intermediate object (W) and sends a message (M) containing a reference of said intermediate object (W) to said second object (Y); and
said second object (Y) calls on an "AddRef" method offered by COM, with a reference of said intermediate object (W) as the parameter;
and **in that**, when COM calls on the "Release" method for releasing said intermediate object (W), said intermediate object (W) sends a message (D) to said first object (X) informing it of the accidental death of said second object (Y).
